# EUROPÄISCHE PATENTANMELDUNG

(11) **EP 1 876 571 A2**
(43) Veröffentlichungstag der Anmeldung: **09.01.2008**
(21) Anmeldenummer: 07012913.5
(22) Anmeldetag: 02.07.2007
(51) Int. Cl.: G07C 9/00

(54) **Skalierbares Verfahren zur Zugriffssteuerung**

(30) Priorität: 05.07.2006 DE 102006032129
(71) Anmelder: ATMEL Germany GmbH, 74072 Heilbronn (DE)
(72) Erfinder: Friedrich, Ulrich, Dipl.-Ing., 74248 Ellhofen (DE); Pangels, Michael, Dipl.-Ing., 71624 Ludwigsburg (DE)
(74) Vertreter: Patentanwälte Ruff, Wilhelm, Beier, Dauster & Partner

(57) **Zusammenfassung**

Die Erfindung betrifft ein Verfahren zur Festlegung der Zugriffsberechtigung auf mindestens einen Speicherbereich eines Transponders, bei welchem dem Speicherbereich (1) eine Zugriffssteuerungsinformation zugeordnet wird, wobei die Zugriffssteuerungsinformation mindestens eine konfigurierbare Haupt-Zugriffssteuerungsinformation umfasst und mindestens durch eine erste Konfiguration der Haupt-Zugriffssteuerungsinformation ein schreibender Zugriff auf den Speicherbereich freigegeben und durch eine zweite Konfiguration der Haupt-Zugriffssteuerungsinformation ein schreibender Zugriff auf den Speicherbereich gesperrt wird, wobei bei dem Verfahren weiter die Zugriffssteuerungsinformation auf dem Transponder abgelegt wird, der Zugriffssteuerungsinformation mindestens eine erste einstellbare Unter-Zugriffssteuerungsinformation zugeordnet wird und durch die Zuordnung der ersten Unter-Zugriffssteuerungsinformation zu der Haupt-Zugriffssteuerungsinformation diese skaliert wird, so dass eine durch die Konfiguration der Haupt-Zugriffssteuerungsinformation festgelegte Zugriffsberechtigung an mindestens eine weitere Anforderung angepasst wird. Die Erfindung betrifft weiter einen skalierbaren Transponder und ein RFID-System umfassend einen skalierbaren Transponder.

## Beschreibung

Die Erfindung betrifft ein Verfahren zur Zugriffssteuerung auf mindestens einen Speicherbereich eines, insbesondere passiven und/oder rückstreubasierten, Transponders, bei welchem dem Speicherbereich eine Zugriffssteuerungsinformation zugeordnet wird, die eine Zugriffsberechtigung auf den Speicherbereich festlegt. Die Erfindung betrifft weiter einen Transponder in einem Radio-Frequency-Identification (RFID)-System sowie ein RFID-System.

Zugriffssteuerungsverfahren finden beispielsweise bei kontaktlosen Identifikationssystemen oder so genannten Radio-Frequency-Identification (RFID)-Systemen Verwendung. Ein Zugriffsteuerungsverfahren ist beispielsweise in der nachveröffentlichten DE 10 2006 002516 A1 beschrieben. Ein derartiges System besteht üblicherweise aus einer Basisstation bzw. einem Lesegerät oder einer Leseeinheit und einer Vielzahl von Transpondern oder Remote-Sensoren, die sich gleichzeitig im Ansprechbereich der Basisstation befinden. Die Transponder bzw. deren Sende- und Empfangseinrichtungen verfügen üblicherweise nicht über einen aktiven Sender für die Datenübertragung zur Basisstation. Derartige nicht aktive Systeme werden als passive Systeme bezeichnet, wenn sie keine eigene Energieversorgung aufweisen, und als semipassive Systeme bezeichnet, wenn sie eine eigene Energieversorgung aufweisen. Passive Transponder entnehmen die zu ihrer Versorgung benötigte Energie dem von der Basisstation emittierten elektromagnetischen Feld.

Zur Datenübertragung von einem Transponder zur Basisstation mit UHF oder Mikrowellen im Fernfeld der Basisstation wird in der Regel die so genannte Backscatter- oder Rückstreukopplung eingesetzt. Hierzu werden von der Basisstation elektromagnetische Trägerwellen emittiert, die durch die Sende- und Empfangseinrichtung des Transponders entsprechend den an die Basisstation zu übertragenden Daten mit einem Modulationsverfahren moduliert und reflektiert werden. Die typischen Modulationsverfahren hierfür sind die Amplitudenmodulation, die Phasenmodulation und die Amplitude-Shift-Keying(ASK)-Unterträgermodulation, bei der die Frequenz oder die Phasenlage des Unterträgers geändert wird.

In dem Normungsvorschlag ISO/IEC_CD 18000-6C vom 07.01.2005 ist ein Zugriffssteuerungsverfahren für Transponder beschrieben (siehe insbesondere ISO/IEC_CD 18000-6C Kapitel 6.3.2, Seiten 27 - 60). Der Transponder wird hierbei zunächst in einem Auswahl- bzw. Arbitrierungsverfahren aus einer Menge von Transpondern ausgewählt. Bei dem beschriebenen Auswahlverfahren handelt es sich um ein stochastisches Verfahren in Form eines slotbasierten ALOHA-Verfahrens. Derartige Auswahlverfahren sind ausführlich beispielsweise in dem Lehrbuch Klaus Finkenzeller, RFID-Handbuch, 3. Aufl., HANSER, 2002, beschrieben (siehe insbesondere Kapitel 7.2, Vielfachzugriffsverfahren- Antikollision, Seiten 203 bis 216).

Für einen Zugriff sendet üblicherweise eine Leseeinheit einen sogenannten Anfrage-Befehl ("Query-command"). Der Transponder antwortet auf diese Anfrage mit der Übermittlung einer Zufallszahl. Durch Senden einer Bestätigung ("Acknowledge") wird der Transponder vereinzelt. Der vereinzelte Transponder überträgt Protokollsteuerbits (PC) und eine Kennung in Form eines so genannten elektronischen Produktcodes (EPC) an die Leseeinheit. Die Protokollsteuerbits beinhalten Informationen bezüglich einer physikalischen Schicht der Übertragungsstrecke. Die Kennung bzw. der elektronische Produktcode EPC bildet unter anderem eine durch den Transponder gekennzeichnete Ware ab. Die Zuordnung vom EPC zu der gekennzeichneten Ware ist standardisiert, so dass aus der Kenntnis der EPC auf die Ware geschlossen werden kann. Weiterhin kann der EPC durch die Leseeinheit als Zeiger auf weitere Information, beispielsweise auf ein dem EPC zugeordnetes Passwort, verwendet werden. Das Passwort kann zur Verriegelung von Speicherbereichen des Transponders für Schreibzugriffe dienen.

Nach der Übertragung der PC und des EPC durch den Transponder ist ein Lese- und/oder ein Schreibzugriff auf Speicherbereiche des Transponders durch die Leseeinheit möglich, es sei denn, dass bestimmte Bereiche für einen Schreibzugriff verriegelt oder gelockt sind. Eine Festlegung des Schreibzugriffs erfolgt beispielsweise über sogenannte Lockbits. Dabei wird durch die Lockbits üblicherweise der Schreibzugriff auf den gesamten Speicherbereich festgelegt. Weiter kann ein Lesezugriff auf Passwörter ebenfalls gesperrt sein. Trotz einer möglichen Leseverriegelung der Passwörter besteht ein gewisses Sicherheitsrisiko, dass unbefugte Personen auf möglicherweise private Speicherinhalte Zugriff haben.

RFID wird in einer Vielzahl an unterschiedlichen Anwendungen eingesetzt. Dabei kann es sich sowohl um geschlossene Datenmanagementsysteme, d.h. Systeme, in welchen die Anzahl und/oder die Art der Daten im Vorfeld festliegen, als auch um offene Datenmanagementsysteme, d.h. Systeme, in welchen die Daten ständig erweitert und/oder variiert werden, handeln.

Insbesondere wenn ein Transponder oder Tag in einem offenen Datenmanagementsystem über eine Lebensdauer eines durch den Transponder gekennzeichneten Produkts eingesetzt werden soll, beispielsweise zur Kennzeichnung einer Ware, ist es oftmals wünschenswert, dass auch ein Lesezugriff auf wenigstens bestimmte, auf dem Transponder gespeicherte Informationen nicht allen Beteiligten offen stehen soll. Zu diesen Informationen zählen beispielsweise ein Herstelldatum, ein gegenwärtiger Eigentümer etc. Andere Daten sollen dagegen durch den Transponder einer Vielzahl an verschiedenen Leseeinheiten oder Basisstationen zur Verfügung gestellt werden. Ist ein Zugriff in diesem Fall beispielsweise nur durch Passwörter möglich, so ist hierfür ein Austausch der Passwörter notwendig. Ein Austausch von Passwörtern ist jedoch insbesondere bei offenen Systemen vielfach nur mit hohem Aufwand möglich.

Beispielsweise bei einer Verwendung des Transponders in so genannten Chipkarten können personenbezogene Daten als Speicherinhalt abgelegt sein. Dabei ist es wünschenswert, den Zugriff auf diese Daten zu reglementieren, um beispielsweise beim Betreten eines Kaufhauses nicht durch Auslesen des Speicherinhaltes automatisch feststellen zu können, ob der betreffende Kunde noch Geld auf der Chipkarte hat oder nicht.

Weiter ist es denkbar, dass ein potentieller Angreifer versucht, Daten aus einem Transponder auszulesen, um so den Transponder zu duplizieren, beispielsweise um gefälschte Waren in Umlauf zu bringen oder um Sabotage zu verüben. Auch aus diesem Grund ist es vielfach wünschenswert, dass neben den auf dem Transponder gespeicherten Passwörtern auch andere Daten nicht für alle Personen frei zugänglich sind.

Der Erfindung liegt die Aufgabe zugrunde, ein Verfahren zur Zugriffssteuerung zur Verfügung zu stellen, das eine leistungsfähige und flexible Zugriffssteuerung auf Speicherbereiche des Transponders und eine effiziente Speicherausnutzung ermöglicht. Der Erfindung liegt weiter die Aufgabe zugrunde, einen Transponder mit einer an verschiedene Anforderungen anpassbaren Zugriffssteuerung sowie ein RFID-System umfassend einen derartigen Transponder zu schaffen.

Diese Aufgabe wird durch die Gegenstände mit den Merkmalen der Ansprüche 1, 7, 8, 15 und 16 gelöst. Weitere Vorteile der Erfindung ergeben sich aus den Unteransprüchen.

Diese Aufgabe wird insbesondere gelöst durch ein Verfahren zur Zugriffssteuerung auf mindestens einen Speicherbereich eines, insbesondere passiven und/oder rückstreubasierten, Transponders, bei welchem dem Speicherbereich eine Zugriffssteuerungsinformation zugeordnet wird. Die Zugriffssteuerungsinformation umfasst dabei mindestens eine konfigurierbare Haupt-Zugriffssteuerungsinformation, wobei mindestens durch eine erste Konfiguration der Haupt-Zugriffssteuerungsinformation ein schreibender Zugriff auf den Speicherbereich freigegeben und durch eine zweite Konfiguration der Haupt-Zugriffssteuerungsinformation ein schreibender Zugriff auf den Speicherbereich gesperrt wird. Die Zugriffssteuerungsinformation wird auf dem Transponder abgelegt. Erfindungsgemäß wird der Haupt-Zugriffssteuerungsinformation mindestens eine erste einstellbare Unter-Zugriffssteuerungsinformation zugeordnet und durch die erste Unter-Zugriffssteuerungsinformation die Zugriffssteuerungsinformation skaliert, so dass eine durch die Konfiguration der Haupt-Zugriffssteuerungsinformation festgelegte Zugriffsberechtigung an mindestens eine weitere Anforderung angepasst wird.

Durch eine Haupt- oder Master-Zugriffssteuerungsinformation ist eine Zugriffsberechtigung, insbesondere eine Schreibberechtigung, grob einstellbar. Hierfür wird in einer vorteilhaften Ausführungsform der Erfindung der Schreibzugriff durch die aus dem oben genannten Normungsvorschlag bekannten Lockbits festgelegt. Der Zugriff auf den Speicherbereich ist erfindungsgemäß weiter durch die Unter- oder Sub-Zugriffssteuerungsinformation individuell einstellbar, wobei spezielle Anforderungen an einen bestimmten Transponder berücksichtigbar sind. Gleichzeitig wird eine einheitliche Struktur geschaffen, welche es ermöglicht, den Transponder und/oder einen Zugriff auf den Transponder in weiten Bereichen einheitlich zu gestalten.

In einer Weiterbildung der Erfindung wird durch die erste Sub- oder Unter-Zugriffssteuerungsinformation eine Zugriffsberechtigung für einen lesenden Zugriff auf den Speicherbereich festgelegt. In dem bereits genannten Normungsvorschlag ISO/IEC_CD 18000-6C ist bislang, abgesehen von dem Leseschutz für das Passwort oder die Passwörter, keine Beschränkung für einen lesenden Zugriff auf Transponder vorgesehen. Durch den lesenden Zugriff kann jedoch ein potentieller Angreifer Daten des Transponders auslesen und den Transponder evtl. für seine Zwecke duplizieren und/oder manipulieren, um so beispielsweise die Echtheit eines Produkts vorzutäuschen. Erfindungsgemäß ist daher vorgesehen, dass ein lesender Zugriff bei Bedarf ebenfalls beschränkbar ist. Hierbei wird ausgenutzt, dass in der Regel bei Freigabe eines Schreibzugriffs auch keine Beschränkung für den Lesezugriff gewünscht ist. Umgekehrt kann jedoch trotz gesperrtem Schreibzugriff ein Lesezugriff ganz oder unter Auflagen freigegeben werden.

In einer Weiterbildung der Erfindung wird durch die erste Unter-Zugriffssteuerungsinformation eine Zugriffsberechtigung für einen schreibenden und/oder einen lesenden Zugriff auf den Speicherbereich in Abhängigkeit mindestens eines Passworts festgelegt. In einer Ausführungsform ist dabei beispielsweise festlegbar, dass ein Lesezugriff durch ein erstes Passwort geschützt ist, wohingegen ein Schreibzugriff durch ein zweites Passwort geschützt ist. Durch geeignete Verteilung der Passwörter an Leseeinheiten kann so unterschiedlichen Nutzern eine unterschiedlicher Zugriff gewährt werden.

In einer Weiterbildung der Erfindung wird die erste Unter-Zugriffssteuerungsinformation zumindest teilweise überladen, wobei einer Konfiguration der Unter-Zugriffssteuerungsinformation mindestens zwei Optionen für eine Zugriffssteuerung zugeordnet werden und die Zugriffsberechtigung mindestens in Abhängigkeit der Haupt-Zugriffssteuerungsinformation, der ersten Unter-Zugriffssteuerungsinformation und eines Auswahlparameters festgelegt wird. Durch das Überladen der Unter-Zugriffssteuerungsinformation ist es möglich, mehrere unterschiedliche Einstellungen vorzunehmen, ohne dass hierfür die Anzahl an Unter-Zugriffssteuerungsinformationen erhöht werden muss. Die Wahl einer bestimmten Option für die Zugriffssteuerung ist dann in Abhängigkeit der Haupt-Zugriffssteuerungsinformation, der ersten Unter-Zugriffssteuerungsinformation und eines Auswahlparameters festgelegt.

In einer Weiterbildung der Erfindung umfasst die erste Unter-Zugriffssteuerungsinformation mindestens ein Unter-Bit, vorzugsweise mindestens zwei Unter-Bits, durch welche vier Bitmuster gebildet werden. Durch die Anzahl an Bits ist eine Anzahl an möglichen Einstellungen und somit eine Tiefe der Skalierbarkeit bestimmbar. Die Unter-Zugriffssteuerungsinformationen können dabei, wie oben beschrieben, zur Erhöhung der Anzahl an Einstellungen überladen werden.

In einer Weiterbildung der Erfindung umfasst die Haupt-Zugriffssteuerungsinformation zwei Haupt-Bits, wobei ein erstes aus den zwei Haupt-Bits gebildetes Bitmuster einen schreibenden Zugriff auf den Speicherbereich freigibt, ein zweites aus den zwei Haupt-Bits gebildetes Bitmuster einen schreibenden Zugriff auf den Speicherbereich in einem "open" oder einem "secure"-Zustand des Transponders freigibt, ein drittes aus den zwei Haupt-Bits gebildetes Bitmuster einen schreibenden Zugriff auf den Speicherbereich in dem "secure"-Zustand des Transponders freigibt, ein viertes aus den zwei Haupt-Bits gebildetes Bitmuster einen schreibenden Zugriff sperrt. Der "open"- oder der "secure"-Zustand des Transponders sind durch den bereits genannten Normungsvorschlag (siehe ISO/IEC_CD 18000-6C, Unterkapitel 6.3.2.4.5 und 6.3.2.4.6) definiert.

In einer Weiterbildung der Erfindung beträgt das erste Bitmuster "00", das zweite Bitmuster "01", das dritte Bitmuster "10" und das vierte Bitmuster "11" jeweils in einer binären Darstellung.

In einer Weiterbildung der Erfindung wird die erste Unter-Zugriffssteuerungsinformation durch mindestens eine nachrangige zweite Unter-Zugriffssteuerungsinformation skaliert. Dadurch ist die Zugriffssteuerung noch besser an verschiedenste Bedürfnisse anpassbar, wobei eine einheitliche Struktur erhalten bleibt.

In einer Weiterbildung der Erfindung umfasst die zweite Unter-Zugriffssteuerungsinformation mindestens ein Unter-Bit, vorzugsweise mindestens zwei Unter-Bits, insbesondere vier Unter-Bits, durch welche 16 Bitmuster gebildet werden.

In einer Weiterbildung der Erfindung wird der Speicherbereich in mindestens zwei Speicherblöcke unterteilt, wobei eine Zugriffsberechtigung auf die Speicherblöcke durch die erste und/oder die zweite Unter-Zugriffssteuerungsinformation individuell festgelegt wird. Es ist denkbar, dass ein Transponder einem Produkt zugeordnet ist, beispielsweise einem Steuergerät für ein Kraftfahrzeug, dem im Laufe seiner Entstehungs- oder Transportgeschichte bis zu einer Übergabe an den Verkaufspunkt (point of sales - POS) eine Vielzahl an Zugriffsberechtigten zugeordnet sind. Die Zugriffsberechtigten müssen dabei beispielsweise Daten aus Testergebnissen o.ä. auf dem Transponder ablegen. Zudem ist es beispielsweise wünschenswert, dass der Zeitpunkt eines Gefahrenübergangs durch jeden Zugriffsberechtigten auf dem Transponder durch eine Art Zeitstempel festgehalten wird. In der Regel ist es dabei wünschenswert, dass Daten, die einmal auf dem Transponder abgelegt wurden, nicht überschrieben werden. Erfindungsgemäß ist daher vorgesehen, dass die verschiedenen Zugriffsberechtigten jeweils auf einen oder mehrere Speicherblöcke mittels eines Passworts zugreifen können, wobei ein lesender und/oder schreibender Zugriff für andere Nutzer ohne das zugehörige Passwort gesperrt ist.

In einer Weiterbildung der Erfindung wird die Zugriffssteuerungsinformation mindestens teilweise in einem Schatten-Speicherbereich abgelegt, wobei der Schatten-Speicherbereich in zu den Speicherblöcken parallele Unter-Speicherbereiche unterteilt wird. Als Schatten-Speicherbereich wird dabei ein nichtflüchtiger Speicher bezeichnet, in welchem Zugriffssteuerungsinformationen abgelegt sind.

In einer Weiterbildung der Erfindung wird die Unterteilung in Speicherblöcke und/oder in Unter-Speicherbereiche während einer Initialisierung dynamisch durchgeführt. Der Schatten-Speicherbereich und/oder der Speicherbereich sind so individuell an bestimmte Anforderungen anpassbar, wobei hierfür kein festgelegter Speicherplatz vorgesehen ist. Dadurch lassen sich die Speicherressourcen des Transponders optimal nutzen.

In einer Weiterbildung der Erfindung wird die Zugriffssteuerungsinformation in einem nur einmalig programmierbaren Speicher, insbesondere in einem einmalig programmierbaren Schattenspeicher, des Transponders abgelegt. Dieses Verfahren wird auch als "perma-lock" bezeichnet. Die Struktur der Zugriffsberechtigung wird dabei einmalig bei einer Einrichtung des Transponders festgelegt. Dadurch ist eine Manipulation der Zugriffssteuerung zu einem späteren Zeitpunkt verhinderbar. In einer anderen Ausführungsform sind die Zellen des Schattenspeichers zumindest teilweise derart ausgebildet, dass sie nur in eine Richtung programmiert werden können, beispielsweise auf "1" setzbar sind. Ein Löschen, d.h. ein erneutes Setzen auf "0", wird dagegen unterbunden. Damit ist es möglich, den Zugriffschutz zu einem späteren Zeitpunkt zu erhöhen, nicht jedoch den Zugriffschutz herabzusetzen.

In einer Weiterbildung der Erfindung wird ein Vorhandensein einer durch mindestens eine Unter-Zugriffssteuerungsinformation skalierten Zugriffssteuerungsinformation auf dem Transponder einer Leseeinheit angezeigt. Dadurch ist eine gute Einbindung in ein allgemeines System möglich.

Die Aufgabe wird weiter gelöst durch einen Transponder, insbesondere einen passiven und/oder rückstreubasierten Transponder, für ein RFID-System, umfassend mindestens einen Transponder und mindestens eine Leseeinheit, mit mindestens einem Speicherbereich, wobei dem Speicherbereich eine Zugriffssteuerungsinformation zugeordnet ist, die Zugriffssteuerungsinformation mindestens eine konfigurierbare Haupt-Zugriffssteuerungsinformation umfasst und mindestens durch eine erste Konfiguration der Haupt- Zugriffssteuerungsinformation ein schreibender Zugriff auf den Speicherbereich freigegeben und durch eine zweite Konfiguration der Haupt-Zugriffssteuerungsinformation ein schreibender Zugriff auf den Speicherbereich gesperrt ist, die Zugriffssteuerungsinformation mindestens eine erste Unter-Zugriffssteuerungsinformation umfasst und die Haupt-Zugriffssteuerungsinformation durch die erste Unter- Zugriffssteuerungsinformation skaliert ist, so dass eine durch die Konfiguration der Haupt-Zugriffssteuerungsinformation festgelegte Zugriffsberechtigung an mindestens eine weitere Anforderung angepasst ist.

Ein derartiger Transponder ist individuell konfiguriert und so an verschiedenste Anforderungen anpassbar.

Weiter wird die Aufgabe gelöst durch ein RFID-System umfassend mindestens eine Leseeinheit und einen Transponder. Vorzugsweise umfasst das System mehrere Leseeinheiten sowie mehrere Transponder, wobei die Leseeinheiten unterschiedliche Zugriffsberechtigungen besitzen.

In Weiterbildung der Erfindung ist die erste Unter-Zugriffssteuerungsinformation zumindest teilweise überladen, wobei eine Zugriffsberechtigung mindestens in Abhängigkeit der Haupt-Zugriffssteuerungsinformation, der ersten Unter-Zugriffssteuerungsinformation und einem Auswahlparameter festgelegt ist, und mindestens ein Auswahlparameter in einer Kreuzreferenz-Liste abgelegt ist. Die Kreuzreferenz-Liste ist der Leseeinheit beispielsweise über das Internet zur Verfügung gestellt. Vorzugsweise ist die Kreuzreferenz-Liste durch einheitliche Bestimmungen; beispielsweise im Rahmen einer Normierung, festgelegt.

In Weiterbildung der Erfindung ist auf dem Transponder mindestens ein Konfigurationsbit abgelegt, das durch die Leseeinheit auslesbar ist, wobei das Konfigurationsbit mindestens einen Skalierungseffekt, eine Skalierungstiefe und/oder einen Auswahlparameter anzeigt. Das Konfigurationsbit ist dabei beispielsweise im Datum des Transponders ablegbar.

Die Aufgabe wird weiter gelöst durch ein Verfahren zur Festlegung einer Zugriffsberechtigung auf mindestens einen Speicherbereich eines, insbesondere passiven und/oder rückstreubasierten Transponders, sowie einen entsprechenden Transponder, bei welchem dem Speicherbereich eine Zugriffssteuerungsinformation zugeordnet wird, wobei die Zugriffssteuerungsinformation mindestens eine konfigurierbare Haupt-Zugriffssteuerungsinformation umfasst, die Haupt-Zugriffssteuerungsinformation zwei Bits umfasst, durch eine erste Konfiguration eines ersten Bits der Haupt-Zugriffssteuerungsinformation ein schreibender Zugriff auf den Speicherbereich freigegeben und durch eine zweite Konfiguration des ersten Bits der Haupt-Zugriffssteuerungsinformation ein schreibender Zugriff auf den Speicherbereich gesperrt wird und durch das zweite Bit der Haupt-Zugriffssteuerungsinformation eine Dauerhaftigkeit oder Permanenz der Zugriffssteuerungsinformation festlegbar ist, die Zugriffssteuerungsinformation auf dem Transponder abgelegt wird, der Zugriffssteuerungsinformation mindestens eine einstellbare Unter-Zugriffssteuerungsinformation zugeordnet wird, und der Speicherbereich in mindestens zwei Speicherblöcke unterteilt wird, wobei eine Zugriffsberechtigung auf die Speicherblöcke durch die Unter-Zugriffssteuerungsinformation individuell festgelegt wird. Die Haupt-Bits entsprechen den beispielsweise aus der bereits genannten ISO/IEC_CD 18000-6C 6.3.2.10.3.5 bekannten Lockbits, wobei durch die zwei Bits vier Bitmuster gebildet werden. Das erste Haupt-Bit legt dabei einen Schreibzugriff auf den Speicherbereich fest und das zweite Haupt-Bit, auch "Permalockbit" genannt, gibt an, ob der so festgelegte Zustand wieder änderbar ist. Die Bit-Muster können dabei überladen werden, so dass beispielsweise das Bit-Muster "01" festlegt, dass Schreiben im "open"- oder "secure"-Zustand des Transponders möglich ist, wobei aufgrund des gesetzten zweiten Bits weiter festgelegt ist, dass diesem Speicherbereich zu keiner Zeit ein Schreibschutz zugeordnet werden kann. Durch das Bitmuster "10" ist dagegen festgelegt, dass Schreiben nur im "secure"-Zustand des Transponders möglich ist und dieser Schreibschutz nicht aufhebbar ist. Ein darüber hinaus gehendes Sperren einzelner Speicherblöcke erfolgt erfindungsgemäß durch jeweilige Unter-Bits.

Vorteilhafte Ausgestaltungen ergeben sich aus den abhängigen Ansprüchen.

Insbesondere ist in einer vorteilhaften Ausgestaltung vorgesehen, dass durch die Unter-Zugriffssteuerungsinformation neben einer Schreibberechtigung auch eine Zugriffsberechtigung für einen lesenden Zugriff auf den Speicherbereich festgelegt wird. Dadurch lassen sich Anpassungen an sicherheitsrelevante Anwendungen auf einfache Weise realisieren.

In einer weiteren Ausgestaltung der Erfindung wird die Zugriffssteuerungsinformation mindestens teilweise in einem Schatten-Speicherbereich abgelegt, wobei der Schatten-Speicherbereich in zu den Speicherblöcken parallele Unter-Speicherbereiche unterteilt wird. Als Schatten-Speicherbereich wird dabei ein nichtflüchtiger Speicher bezeichnet, in welchem Zugriffssteuerungsinformationen abgelegt sind.

In einer Weiterbildung der Erfindung wird die Unterteilung in Speicherblöcke und/oder in Unter-Speicherbereiche während einer Initialisierung dynamisch durchgeführt. Der Schatten-Speicherbereich und/oder der Speicherbereich sind so individuell an bestimmte Anforderungen anpassbar, wobei hierfür kein festgelegter Speicherplatz vorgesehen ist. Dadurch lassen sich die Speicherressourcen des Transponders optimal nutzen.

Weitere Vorteile der Erfindung ergeben sich aus der nachfolgenden Beschreibung von Ausführungsbeispielen der Erfindung, die in den Zeichnungen schematisch dargestellt sind. Für gleiche Bauteile werden dabei einheitliche Bezugszeichen verwendet.

In den Zeichnungen zeigen:
- Fig. 1: mögliche Bitmuster einer Zugriffssteuerungsinformation;
- Fig. 2: eine schematische Darstellung eines in Speicherblöcke unterteilten Speicherbereichs sowie eines zugehörigen Schatten-Speicherbereichs;
- Fig. 3: eine schematische Darstellung einer dynamischen Unterteilung des Speicherbereichs und des Schatten-Speicherbereichs in Speicherblöcke;
- Fig. 4: eine schematische Darstellung eines in Speicherblöcke unterteilten Speicherbereichs sowie eines zugehörigen Schatten-Speicherbereichs gemäß einem zweiten Ausführungsbeispiel und
- Fig. 5: eine schematische Darstellung eines in Speicherblöcke unterteilten Speicherbereichs sowie eines zugehörigen Schatten-Speicherbereichs gemäß einem dritten Ausführungsbeispiel.

Durch die Zugriffssteuerungsinformation wird eine Zugriffsberechtigung auf einen Speicherbereich eines Transponders festgelegt. Erfindungsgemäß umfasst eine Zugriffssteuerungsinformation eine Haupt- oder Master-Zugriffssteuerungsinformation und mindestens eine erste Unter- oder Sub-Zugriffssteuerungsinformation, durch welche die Haupt- Zugriffssteuerungsinformation skaliert wird, so dass eine individuelle Einstellung einer Zugriffsberechtigung festlegbar ist. In einer bevorzugten Ausführungsform sind die Haupt- Zugriffssteuerungsinformation und die Unter- Zugriffssteuerungsinformation jeweils durch ein Bitmuster, umfassend jeweils zwei Bits, gebildet.

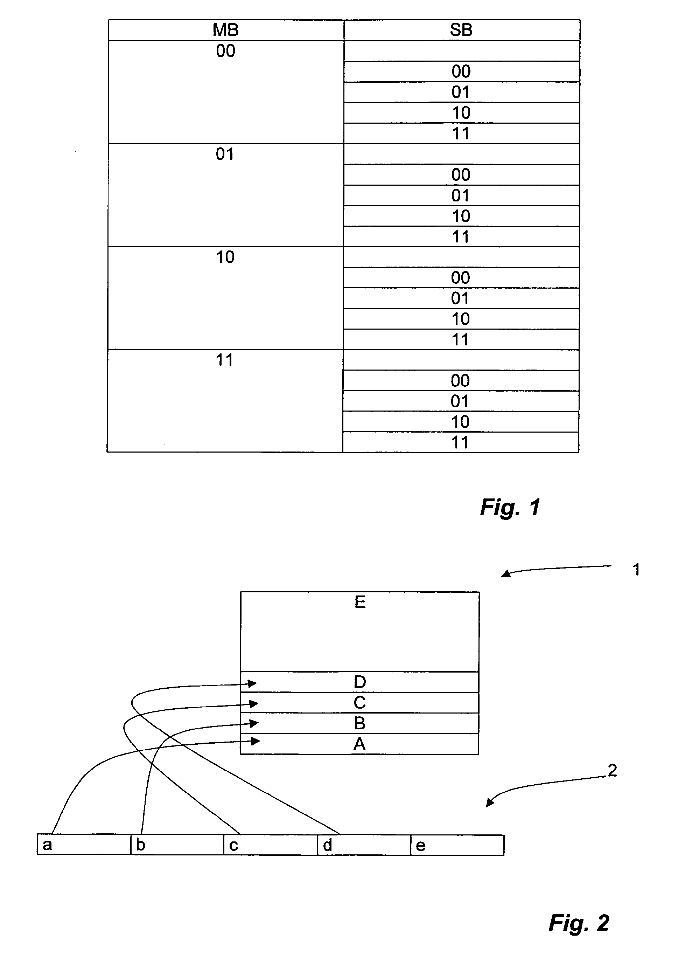

Fig. 1 zeigt schematisch die möglichen Bitmuster bei Verwendung von jeweils zwei Bits, wobei in der ersten Spalte die Haupt- oder Master-Bits MB dargestellt sind, welche durch die in der zweiten Spalte dargestellten Unter-Bits oder Sub-Bits SB skaliert sind.

Die Haupt-Bits oder Masterbits MB sind beispielsweise die aus dem bereits genannten Normungsvorschlag (s. beispielsweise ISO/IEC_CD 18000-6C 6.3.2.10.3.5) bekannten Lockbits. In einer vorteilhaften Ausführungsform wird den Master-Bits MB dabei folgende Bedeutung zugewiesen:
- 00:: kein Schreibschutz;
- 01:: Schreiben ist nur im "open"- oder "secure"-Zustand des Transponders möglich;
- 10:: Schreiben ist nur im "secure"-Zustand des Transponders möglich und
- 11:: ein Schreiben auf diesem Speicherbereich ist in keinem Zustand des Transponders möglich.

In einer anderen, nicht dargestellten Ausgestaltung ist nur ein Haupt- oder Master-Bit vorhanden, welches entweder den Wert "0" oder den Wert "1" annimmt, wobei beispielsweise bei dem Wert "0" kein Schreibschutz gegeben ist und bei dem Wert "1" der Speicherbereich zumindest gegen Schreiben geschützt ist.

Durch die Unter-Bits oder Sub-Bits SB ist die Berechtigung weiter skalierbar, d.h. an bestimmte Bedürfnisse anpassbar. Die Einstellmöglichkeiten sind dabei u.a. von weiteren Einstellungen des Transponders abhängig. Für eine Kompatibilität mit Transpondern ohne Skalierungsmöglichkeiten wird in einer Ausführungsform einem Muster oder einer Konfiguration der Unter-Bits die "unskalierte" Option zugewiesen, beispielsweise dem Muster "00".

In einem ersten Ausführungsbeispiel ist ein Transponder derart eingestellt, dass dem Transponder nur eine Identifikationskennung (ID) zugewiesen ist. Mögliche Einstellungen für einen Zugriff auf den Speicherbereich sind dabei in der folgenden Tabelle wiedergegeben, wobei in der ersten Spalte die Bitmuster der Masterbits und in der zweiten Spalte die Bitmuster der Unter-Bits dargestellt sind.

| | | |
|---|---|---|
| 00 | | |
| | 00 | Keine Beschränkung beim Lesen oder Schreiben |
| | 01 | Noch unbestimmt oder reserviert für spätere Funktionen |
| | 10 | Noch unbestimmt oder reserviert für spätere Funktionen |
| | 11 | Noch unbestimmt oder reserviert für spätere Funktionen |
| 01 | | |
| | 00 | Schreiben und Lesen nur im "open"- oder "secure"- Zustand möglich |
| | 01 | dito |
| | 10 | dito |
| | 11 | Kein Schreiben möglich, Lesen nur im "open"- oder "secure"-Zustand möglich |
| 10 | | |
| | 00 | Schreiben nur im "secure"-Zustand möglich, keine Beschränkung für Lesen |
| | 01 | Schreiben und Lesen nur im "secure"-Zustand mit Passwort möglich, |
| | 10 | Schreiben nur im "secure"-Zustand mit Passwort1 möglich, Lesen nur im "secure"-Zustand mit Passwort2 möglich |
| | 11 | Noch unbestimmt oder reserviert für spätere Funktionen |
| 11 | | |
| | 00 | Kein Schreiben möglich, Lesen ohne Passwort möglich |
| | 01 | Kein Schreiben, Lesen mit Passwort1 |
| | 10 | Kein Schreiben, Lesen mit Passwort2 |
| | 11 | Kein Schreiben, kein Lesen |

Diese, den verschiedenen Bitmustern der Haupt-Bits und Unter-Bits zugeordneten, Einstellungen sind selbstverständlich nur eine Möglichkeit, den Transponder an verschiedene Anforderungen anzupassen. Dabei wird in dem Ausführungsbeispiel dem gesamten Speicherbereich eine gemeinsame Zugriffssteuerung zugewiesen.

In einer vorteilhaften Ausführungsform ist eine weitere Feineinstellung der Zugriffssteuerung durch zweite Unter-Bits möglich. So ist es beispielsweise denkbar, dass die Zugriffssteuerungsinformation umfassend folgendes Bitmuster "11 11" aus den Haupt-Bits MB "11" und den Unter-Bits SB "11" überladen wird. Sind weitere, zweite Unter-Bits vorhanden, so werden diese genutzt, um eine weitere Einstellung oder Skalierung vorzunehmen.

In einem zweiten Ausführungsbeispiel ist ein Bit oder sind mehrere, insbesondere vier Bits als eine zweite Unter-Zugriffssteuerungsinformation vorgesehen. Durch die Haupt-Bits und die ersten Unter-Bits ist in dem Ausführungsbeispiel eine Einstellung vornehmbar, welche den gesamten Speicherbereich des Transponders betrifft. Durch das zweite Unter-Bit oder die zweiten Unter-Bits ist es weiter möglich, den Speicherbereich in eine beliebige Anzahl an Speicherblöcken aufzuteilen, wobei der Lese- und/oder Schreibzugriff auf den jeweiligen Speicherblock durch das zweite Unter-Bit oder die zweiten Unter-Bits, insbesondere bei vier Unter-Bits durch ein Bitmuster mit vier Bits gemäß Fig. 1 einstellbar ist.

Fig. 2 zeigt schematisch einen Speicherbereich 1 eines nicht dargestellten Transponders. Der Speicherbereich 1 ist in fünf Speicherblöcke A bis E aufgeteilt. Jedem Speicherblock A bis E ist eine Zugriffssteuerungsinformation α-e zugeordnet, welche eine Zugriffsberechtigung auf den Speicherblock festlegt. Die Zugriffssteuerungsinformationen a-e sind in einem Schattenspeicher 2 abgelegt, welcher in zu den Speicherblöcken A-E parallele oder korrespondierende Unterspeicherbereiche a-e unterteilt ist.

In der dargestellten Ausführungsform umfassen die Zugriffssteuerungsinformationen a bis d mindestens acht Bits.

Weisen die ersten Master-Bits MB und die ersten Sub-Bits SB das genannte Bitmuster "1111" auf, so wird signalisiert, dass weitere Informationen folgen können. Die folgenden vier Bits dienen dann zur gezielten Einstellung Zugriffssteuerung auf den Speicherblock A. Folgen keine weiteren Informationen, so signalisiert das Bitmuster "1111" beispielsweise wie oben beschrieben, dass weder Schreiben noch Lesen möglich ist. Das Bitmuster ist somit überladen und der Speicherbereich dadurch individuell konfigurierbar.

Die anschließend folgenden acht Bits dienen der Einstellung einer Zugriffsberechtigung auf einen Speicherblock B.

Der Zugriffssteuerungsinformation e folgen keine weiteren Subbits, so dass die Zugriffssteuerungsinformation beispielsweise auch dem Speicherblock E nachgeordnete Speicherblöcke gelten kann, falls solche nachgeordneten Speicherblöcke vorhanden sind.

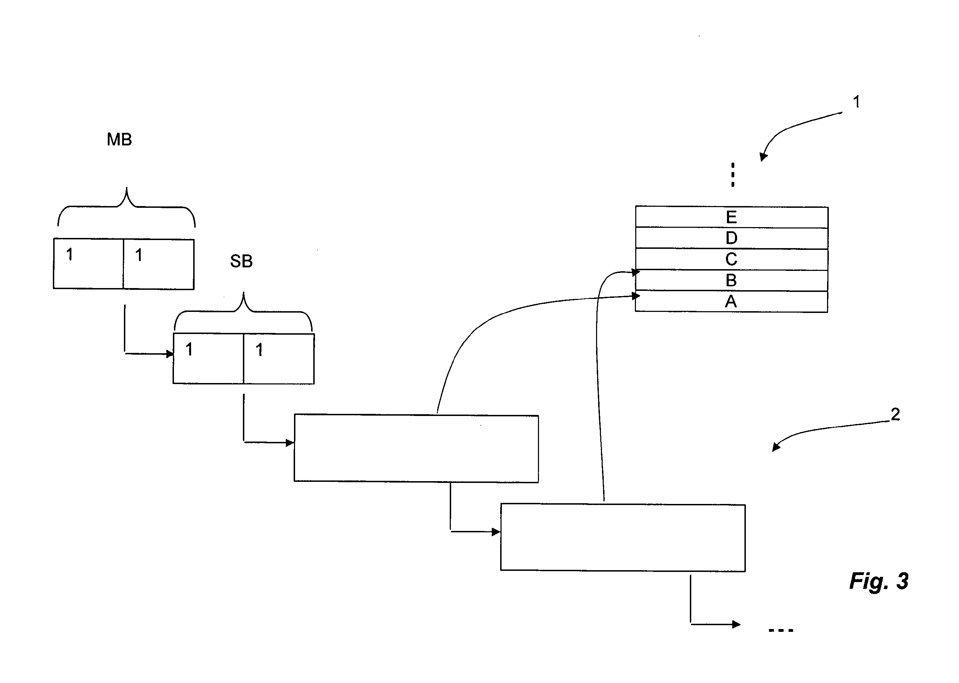

Fig. 3 zeigt schematisch eine dynamische Unterteilung des Speicherbereichs 1 in Speicherblöcke A - E sowie eine Unterteilung des Schatten-Speicherbereichs 2 in parallele oder korrespondierende Unter-Speicherbereiche.

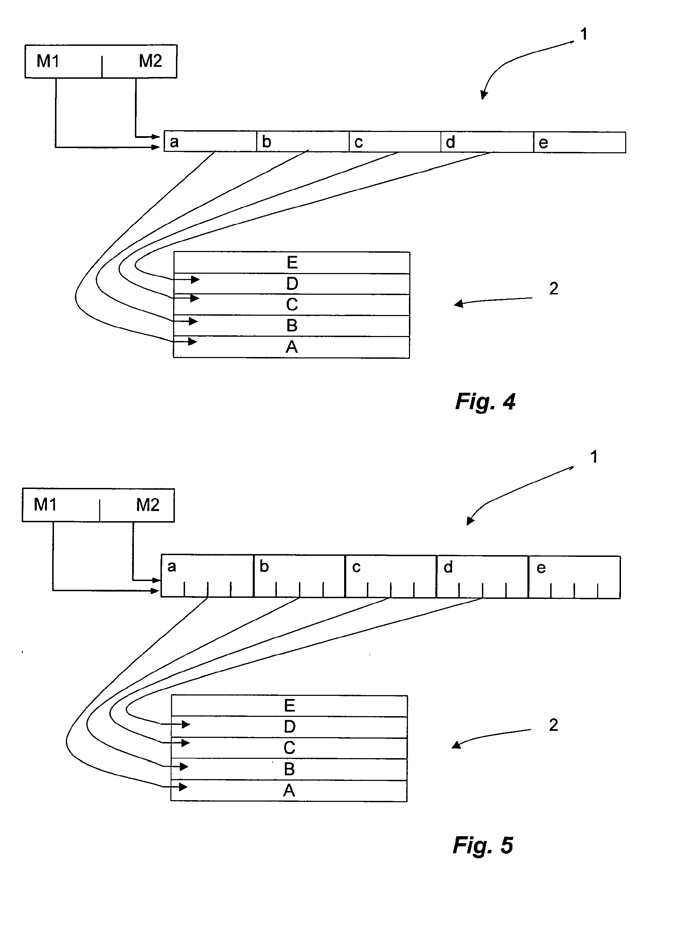

Fig. 4 zeigt eine weitere Ausgestaltung der Erfindung, wobei der Speicherbereich 1 ebenfalls in eine beliebige Anzahl an Speicherblöcken A - E entsprechend Fig. 2 unterteilt ist. Ein Zugriff auf den gesamten Speicherbereich 1 oder alle Speicherblöcke A - E ist durch zwei Master-Bits M1, M2 festgelegt, welche den aus dem genannten Normungsvorschlag (s. beispielsweise ISO/IEC_CD 18000-6C 6.3.2.10.3.5) bekannten Lockbits entsprechen. Ein erstes Master-Bit M1 oder Lockbit legt dabei einen Schreibschutz für den Speicherbereich fest, während ein zweites Master-Bit M2 oder Lockbit die eingestellte Zugriffsberechtigung dauerhaft macht. Das zweite Master-Bit M2 wird daher auch als Permalock-Bit bezeichnet. In einer dem Normungsvorschlag entsprechenden Ausführungsform wird den Master-Bits M1, M2 dabei folgende Bedeutung zugewiesen:
- 00:: Schreiben im "open"- oder "secure"-Zustand des Transponders möglich;
- 01:: Schreiben im "open"- oder "secure"-Zustand des Transponders immer möglich; Speicherbereich kann niemals schreibgeschützt (gelockt) werden;
- 10:: Schreiben ist nur im "secure"-Zustand des Transponders möglich und
- 11:: ein Schreiben auf diesem Speicherbereich ist in keinem Zustand des Transponders möglich.

Durch den genannten Normungsvorschlag ist festgelegt, dass ein einmal gesetztes Permalock-Bit nicht wieder gelöscht werden kann.

Erfindungsgemäß wird jedem Speicherblock A- E weiter mindestens eine Unter-Zugriffsteuerungsinformation a - e umfassend mindestens ein Unter-Bit oder Block-Bit zugewiesen, wobei durch das Block-Bit ein Zugriff auf einen zugehörigen Speicherblock A - E entgegen einer allgemeinen Zugriffssteuerungsinformation M1, M2 gesperrt werden kann. Das Block-Unter-Bit ist den Master-Bits untergeordnet, d.h. wenn die Master-Bits die oben beschriebene Konfiguration "01" aufweisen, gemäß welcher der gesamte Speicherbereich nicht schreibgeschützt werden kann, so wird ein gesetztes Block-Unter-Bit ignoriert und/oder ein Setzen des Block-Unter-Bits verhindert. Das Block-Unter-Bit ist in einer Ausgestaltung einmalig programmierbar gestaltet, wobei ein gesetzter Zustand nicht umkehrbar ist. In einer Ausgangskonfiguration des Transponders sind beispielsweise alle Unter-Bits nicht gesetzt. Einzelne Speicherblöcke A - E können dann durch Setzen des jeweiligen Unter-Bits gegen Schreiben (dauerhaft) geschützt werden.

In einer weiteren Ausgestaltung ist mehr als ein Unter-Bit pro Unter-Zugriffssteuerungsinformation a - e vorgesehen, beispielsweise vier Unter-Bits, wie in Fig. 5 dargestellt. Dadurch ist eine individuelle Anpassungen jedes einzelnen Speicherblocks A - E an weitere Anforderungen möglich. Beispielsweise lassen sich Lesezugriffe auf einzelne Speicherblöcke A - E individuell festlegen.

In wieder anderen Ausgestaltungen ist jeweils zwei oder mehr Speicherblöcken ein gemeinsames Sub-Bit zugeordnet.

In einer Anwendung ist ein Transponder oder ein Tag beispielsweise in Verbindung mit einer Sensorik zum Überwachen von Kühlgütern eingesetzt, wobei durch die Sensorik Temperaturverläufe auf den Transponder in einem dafür vorgesehenen Speicherbereich ablegbar sind. Um zu vermeiden, dass Temperaturverläufe gefälscht werden, beispielsweise um die Einhaltung von gesetzlich vorgeschriebenen Qualitätsstandards vorzutäuschen, ist dieser Speicherbereich und/oder einem Speicherblock oder mehrere Speicherblöcke des Speicherbereichs gegen ein Überschreiben durch Leseeinheiten von außen, beispielsweise über die sog. Luftschnittstelle, zu schützen. Gleichzeitig soll es in dem genannten Beispiel möglich sein, andere Speicherblöcke und/oder andere Speicherbereiche zum Beschreiben für bestimmte Nutzer freizugeben, so dass beispielsweise bei einem Gefahrenübergang ein berechtigter Nutzer dieses auf dem Transponder durch einen Zeitstempel vermerken kann. Es ist offensichtlich, dass es dabei nicht wünschenswert ist, dass in der Logistikkette aufeinanderfolgende Nutzer auf die gleichen Speicherblöcke einen schreibenden Zugriff haben. Anderenfalls könnte durch einen nachfolgenden Nutzer der Zeitpunkt des an ihn erfolgten Gefahrenübergangs jederzeit wieder korrigiert werden. Den verschiedenen Nutzern wird beispielsweise jeweils ein Passwort mitgeteilt, wobei sie unter Verwendung dieses Passworts schreibenden Zugriff auf einen ihnen zugeordneten Speicherblock erhalten. Ein Lesezugriff kann ebenfalls gesperrt oder unter Auflagen freigegeben werden. Durch die Unterteilung in mehrere Speicherblöcke mit unterschiedlicher Zugangsberechtigung können somit die Risiken in der Logistikkette für einen Spediteur reduziert werden.

In einem weiteren Ausführungsbeispiel ist ein Transponder mit zwei Identifikationskennungen 1D1, 1D2 konfiguriert. Die beiden im Transponder üblicherweise vorhandenen Passwortbereiche sind dann den zwei Identifikationskennungen ID1, ID2 zugeordnet. Dadurch ergeben sich die in der folgenden Tabelle dargestellten Einstellmöglichkeiten:

| | | |
|---|---|---|
| 00 | | |
| | 00 | Keine Beschränkung beim Lesen oder Schreiben |
| | 01 | Noch unbestimmt oder reserviert für spätere Funktionen |
| | 10 | Noch unbestimmt oder reserviert für spätere Funktionen |
| | 11 | Noch unbestimmt oder reserviert für spätere Funktionen |
| 01 | | |
| | 00 | Schreiben und Lesen mit ID1 nur im "open"- oder "secure"-Zustand möglich, mit aktiver ID2 keine Schreib- und/oder Leseberechtigung |
| | 01 | dito |
| | 10 | Schreiben und Lesen mit ID2 nur im "secure"-Zustand möglich |
| | 11 | Kein Schreiben möglich, Lesen nur im "open"- oder "secure"-Zustand mit ID1 möglich, mit aktiver ID2 keine Schreib- und/oder Leseberechtigung |
| 10 | | |
| | 00 | Schreiben und Lesen mit ID2 nur im "open"- oder "secure"-Zustand möglich, mit aktiver ID1 keine Schreib- und/oder Leseberechtigung |
| | 01 | Dito |
| | 10 | Schreiben und Lesen mit ID1 nur im "secure"-Zustand möglich |
| | 11 | Kein Schreiben möglich, Lesen nur im "open"- oder "secure"-Zustand mit ID2 möglich, mit aktiver ID1 keine Schreib- und/oder Leseberechtigung |
| 11 | | |
| | 00 | Kein Schreiben möglich, Lesen ohne Passwort möglich |
| | 01 | Kein Schreiben, Lesen mit ID1 |
| | 10 | Kein Schreiben, Lesen mit ID2 |
| | 11 | Kein Schreiben, kein Lesen |

Dabei ist in einer Ausführungsform die Bitfolge "1111" überladen. Ist eine zweite Unter-Zugriffssteuerungsinformation vorhanden, so legt beispielsweise die Bitfolge "1111" lediglich fest, dass kein Schreiben möglich ist. Eine Leseberechtigung ist durch eine zweite Unter-Zugriffssteuerungsinformation bestimmbar.

In einem weiteren Ausführungsbeispiel ist der Speicherbereich dem EPC zugeordnet. Dabei ist durch das erfindungsgemäße Verfahren eine Einstellung so vorgenommen, dass ohne Unter-Bits der durch die Master-Bits, d.h. vorzugsweise die Lock-Bits, festgelegte Schreibschutz nur für eine erste Identifikationskennungen ID1 gilt. Existiert dagegen eine erfindungsgemäße Unter-Zugriffssteuerungsinformation, so lassen sich folgende Funktionen in Abhängigkeit der erfindungsgemäßen Unter-Zugriffssteuerungsinformation einstellen: (1) Der EPC wird nur mit Hilfe des Lesebefehls ("read"-Befehl gemäß Normungsvorschlag, siehe beispielsweise ISO/IEC_CD 18000-6C 6.3.2.10.3.2) gesendet; (2) EPC wird mit Hilfe des Lesebefehls verschlüsselt ausgegeben; (3) die zweite ldentifikationskennungen ID2 und/oder jede weitere Information wird nach einem Acknowledge-Befehl verschlüsselt ausgegeben; und/oder (4) Untereinstellungen gelten nur für die weiteren Identifikationskennungen.

Die aufgezählten Einstellmöglichkeiten sind beispielhaft. Es ist offensichtlich, dass andere Funktionen den einzelnen Zugriffssteuerungsinformationen zugeordnet werden können, wobei jeweils eine grobe Einstellung mittels der Haupt-Zugriffssteuerungsinformation erfolgt und eine Feineinstellung durch eine oder mehrere untergeordneten Unter-Zugriffssteuerungsinformationen durchführbar ist.

## Patentansprüche

1. Verfahren zur Festlegung einer Zugriffsberechtigung auf mindestens einen Speicherbereich eines, insbesondere passiven und/oder rückstreubasierten, Transponders, bei dem
- dem Speicherbereich (1) eine Zugriffssteuerungsinformation zugeordnet wird, wobei
■ die Zugriffssteuerungsinformation mindestens eine konfigurierbare Haupt-Zugriffssteuerungsinformation umfasst und
■ mindestens durch eine erste Konfiguration der Haupt-Zugriffssteuerungsinformation ein schreibender Zugriff auf den Speicherbereich freigegeben und durch eine zweite Konfiguration der Haupt-Zugriffssteuerungsinformation ein schreibender Zugriff auf den Speicherbereich gesperrt wird, und
- die Zugriffssteuerungsinformation auf dem Transponder abgelegt wird,
**dadurch gekennzeichnet, dass**
- der Haupt-Zugriffssteuerungsinformation mindestens eine erste einstellbare Unter-Zugriffssteuerungsinformation zugeordnet wird, , wobei durch die Zuordnung der ersten Unter-Zugriffssteuerungsinformation die Haupt-Zugriffssteuerungsinformation skaliert wird, so dass eine durch die Konfiguration der Haupt-Zugriffssteuerungsinformation festgelegte Zugriffsberechtigung an mindestens eine weitere Anforderung angepasst wird.

2. Verfahren nach Anspruch 1, **dadurch gekennzeichnet, dass** durch die erste Unter-Zugriffssteuerungsinformation eine Zugriffsberechtigung für einen lesenden Zugriff auf den Speicherbereich festgelegt wird.

3. Verfahren nach Anspruch 1 oder 2, **dadurch gekennzeichnet, dass** die erste Unter-Zugriffssteuerungsinformation zumindest teilweise überladen wird, wobei
- einer Konfiguration der Unter-Zugriffssteuerungsinformation mindestens zwei Optionen für eine Zugriffssteuerung zugeordnet werden und
- die Zugriffsberechtigung mindestens in Abhängigkeit der Haupt-Zugriffssteuerungsinformation, der ersten Unter-Zugriffssteuerungsinformation und eines Auswahlparameters festgelegt wird.

4. Verfahren nach einem der Ansprüche 1 bis 3, **dadurch gekennzeichnet, dass** die erste Unter-Zugriffssteuerungsinformation mindestens ein Unter-Bit (SB), vorzugsweise mindestens zwei Unter-Bits (SB), durch welche vier Bitmuster gebildet werden, umfasst.

5. Verfahren nach einem der Ansprüche 1 bis 4, **dadurch gekennzeichnet, dass** die erste Unter-Zugriffssteuerungsinformation durch mindestens eine nachrangige zweite Unter-Zugriffssteuerungsinformation skaliert wird.

6. Verfahren nach Anspruch 5, **dadurch gekennzeichnet, dass** der Speicherbereich (1) in mindestens zwei Speicherblöcke (A - E) unterteilt wird, wobei eine Zugriffsberechtigung (a - e) auf die Speicherblöcke (A - E) durch die zweite Unter-Zugriffssteuerungsinformation individuell festgelegt wird.

7. Transponder, insbesondere passiver und/oder rückstreubasierter Transponder, für ein RFID-System, umfassend mindestens einen Transponder und mindestens eine Leseeinheit, mit mindestens einem Speicherbereich, wobei
- dem Speicherbereich eine Zugriffssteuerungsinformation zur Festlegung einer Zugriffsberechtigung auf den Speicherbereich zugeordnet ist,
- die Zugriffssteuerungsinformation mindestens eine konfigurierbare Haupt-Zugriffssteuerungsinformation umfasst und
- mindestens durch eine erste Konfiguration der Haupt-Zugriffssteuerungsinformation ein schreibender Zugriff auf den Speicherbereich freigegeben und durch eine zweite Konfiguration der Haupt-Zugriffssteuerungsinformation ein schreibender Zugriff auf den Speicherbereich gesperrt ist,
**dadurch gekennzeichnet, dass**
- die Zugriffssteuerungsinformation mindestens eine erste Unter -Zugriffssteuerungsinformation umfasst und
- die Haupt-Zugriffssteuerungsinformation durch die erste Unter-Zugriffssteuerungsinformation skaliert ist, so dass eine durch die Konfiguration der Haupt-Zugriffssteuerungsinformation festgelegte Zugriffsberechtigung an mindestens eine weitere Anforderung angepasst ist.

8. Verfahren zur Festlegung einer Zugriffsberechtigung auf mindestens einen Speicherbereich eines, insbesondere passiven und/oder rückstreubasierten Transponders, bei dem
- dem Speicherbereich (1) eine Zugriffssteuerungsinformation zugeordnet wird, wobei
■ die Zugriffssteuerungsinformation mindestens eine konfigurierbare Haupt-Zugriffssteuerungsinformation umfasst,
■ die Haupt-Zugriffssteuerungsinformation zwei Bits umfasst,
■ durch eine erste Konfiguration eines ersten Bits der Haupt-Zugriffssteuerungsinformation ein schreibender Zugriff auf den Speicherbereich freigegeben und durch eine zweite Konfiguration des ersten Bits der Haupt-Zugriffssteuerungsinformation ein schreibender Zugriff auf den Speicherbereich gesperrt wird und
■ durch das zweite Bit der Haupt-Zugriffssteuerungsinformation eine Dauerhaftigkeit der Zugriffssteuerungsinformation festlegbar ist, und
- die Zugriffssteuerungsinformation auf dem Transponder abgelegt wird,
**dadurch gekennzeichnet, dass**
- der Zugriffssteuerungsinformation mindestens eine einstellbare Unter-Zugriffssteuerungsinformation zugeordnet wird, und
- der Speicherbereich (1) in mindestens zwei Speicherblöcke (A - E) unterteilt wird, wobei eine Zugriffsberechtigung (a - e) auf die Speicherblöcke (A - E) durch die Unter-Zugriffssteuerungsinformation individuell festgelegt wird.

9. Verfahren nach Anspruch 8, **dadurch gekennzeichnet, dass** die Unter-Zugriffssteuerungsinformation mindestens ein Unter-Bit, vorzugsweise mindestens zwei Unter-Bits, insbesondere vier Unter-Bits, durch welche 16 Bitmuster gebildet werden, umfasst.

10. Verfahren nach Anspruch 8 oder 9, **dadurch gekennzeichnet, dass** durch die Unter-Zugriffssteuerungsinformation weiter eine Zugriffsberechtigung für einen lesenden Zugriff auf den Speicherbereich festgelegt wird.

11. Verfahren nach Anspruch 8, 9 oder 10, **dadurch gekennzeichnet, dass** durch die Unter-Zugriffssteuerungsinformation eine Zugriffsberechtigung für einen schreibenden und/oder einen lesenden Zugriff auf den Speicherbereich in Abhängigkeit mindestens eines Passworts festgelegt wird.

12. Verfahren nach einem der Ansprüche 8 bis 11, **dadurch gekennzeichnet, dass** die Unter-Zugriffssteuerungsinformation zumindest teilweise überladen wird, wobei
- einer Konfiguration der Unter-Zugriffssteuerungsinformation mindestens zwei Optionen für eine Zugriffssteuerung zugeordnet werden und
- die Zugriffsberechtigung mindestens in Abhängigkeit der Haupt-Zugriffssteuerungsinformation, der Unter-Zugriffssteuerungsinformation und eines Auswahlparameters festgelegt wird.

13. Verfahren nach einem der Ansprüche 8 bis 12, **dadurch gekennzeichnet, dass** die Zugriffssteuerungsinformation mindestens teilweise in einem Schatten-Speicherbereich (2) abgelegt wird, wobei der Schatten-Speicherbereich in zu den Speicherblöcken (A - E) parallele Unter-Speicherbereiche unterteilt wird.

14. Verfahren nach einem der Ansprüche 8 bis 13, **dadurch gekennzeichnet, dass** die Unterteilung in Speicherblöcke und/oder in Unter-Speicherbereiche während einer Initialisierung dynamisch durchgeführt wird.

15. Transponder, insbesondere passiver und/oder rückstreubasierter Transponder, für ein RFID-System, umfassend mindestens einen Transponder und mindestens eine Leseeinheit, mit mindestens einem Speicherbereich, wobei
- dem Speicherbereich eine Zugriffssteuerungsinformation zur Festlegung einer Zugriffsberechtigung auf den Speicherbereich zugeordnet ist,
- die Zugriffssteuerungsinformation mindestens eine konfigurierbare Haupt-Zugriffssteuerungsinformation umfasst,
- die Haupt-Zugriffssteuerungsinformation zwei Bits umfasst,
- mindestens durch eine erste Konfiguration eines ersten Bits der Haupt-Zugriffssteuerungsinformation ein schreibender Zugriff auf den Speicherbereich freigegeben und durch eine zweite Konfiguration des ersten Bits der Haupt-Zugriffssteuerungsinformation ein schreibender Zugriff auf den Speicherbereich gesperrt ist und
- durch das zweite Bit der Haupt-Zugriffssteuerungsinformation eine Dauerhaftigkeit der Zugriffssteuerungsinformation festlegbar ist,
**dadurch gekennzeichnet, dass**
- die Zugriffssteuerungsinformation mindestens eine erste Unter -Zugriffssteuerungsinformation umfasst und
- der Speicherbereich in mindestens zwei Speicherblöcke (A - E) unterteilt ist, wobei eine Zugriffsberechtigung (a - e) auf die Speicherblöcke (A - E) durch die Unter-Zugriffssteuerungsinformation individuell festlegbar ist.

16. RFID-System umfassend mindestens eine Leseeinheit und mindestens einen Transponder nach einem der Ansprüche 7 oder 15.

17. RFID-System nach Anspruch 16, **dadurch gekennzeichnet, dass** die erste Unter-Zugriffssteuerungsinformation zumindest teilweise überladen ist, wobei
- eine Zugriffsberechtigung mindestens in Abhängigkeit der Haupt-Zugriffssteuerungsinformation, der Unter-Zugriffssteuerungsinformation und einem Auswahlparameter festgelegt ist, und
- mindestens ein Auswahlparameter in einer Kreuzreferenz-Liste abgelegt ist.

18. RFID-System nach Anspruch 16 oder 17, **dadurch gekennzeichnet, dass** auf dem Transponder mindestens ein Konfigurationsbit abgelegt ist, das durch die Leseeinheit auslesbar ist, wobei das Konfigurationsbit mindestens einen Skalierungseffekt, eine Skalierungstiefe und/oder einen Auswahlparameter anzeigt.
